Europäisches Patentamt

European Patent Office

Office européen des brevets

(19)

(11) Numéro de publication : **0 066 031
B1**

# (12) FASCICULE DE BREVET EUROPÉEN

(45) Date de publication du fascicule du brevet :
**18.09.85**

(21) Numéro de dépôt : **81810208.9**

(22) Date de dépôt : **01.06.81**

(51) Int. Cl.⁴ : **F 16 B 43/00, F 16 J 15/06,
F 16 B 39/34**

(54) **Bague d'étanchéité.**

(43) Date de publication de la demande :
**08.12.82 Bulletin 82/49**

(45) Mention de la délivrance du brevet :
**18.09.85 Bulletin 85/38**

(84) Etats contractants désignés :
**AT BE CH DE FR GB IT LI LU NL SE**

(56) Documents cités :
**FR-A- 2 313 589
US-A- 3 572 414**

(73) Titulaire : **PABRECO S.A.
2, Rte Mgr. Besson
CH-1700 Fribourg (CH)**

(72) Inventeur : **Mattes, Rolf
8, Rte Mgr. Besson
CH-1700 Fribourg (CH)**

(74) Mandataire : **Moinas, Michel
Moinas & Cie 42, rue Plantamour
CH-1201 Genève (CH)**

Jouve, 18, rue St-Denis, 75001 Paris, France

## Description

L'invention concerne une bague d'étanchéité de section profilée, par exemple en forme de L comportant une face interne recevant un joint élastique.

Dans les bagues d'étanchéité connues dont la section profilée est la plupart du temps en forme de L, la branche du L parallèle à l'axe de la bague a l'inconvénient de se raccourcir sous l'effet de la pression axiale. Ceci a pour conséquence que le joint d'étanchéité a trop d'espace dans la bague et par suite ne peut plus remplir sa fonction. Dans les cas défavorables, le joint peut même être pressé hors de la bague sous l'action de la pression et l'étanchéité peut être mise en doute.

On connaît, d'après l'exposé US-A-3 572 414, une bague d'étanchéité de section profilée comportant une face interne recevant un joint élastique ; la partie de la bague d'étanchéité qui est sensiblement parallèle à l'axe de la bague d'étanchéité et sur laquelle s'exerce la pression consiste en une lèvre d'étanchéité déformable dont la face externe fait un angle aigu avec l'axe de la bague d'étanchéité et est dirigée vers le joint et dont la section va en se rétrécissant vers le sommet de l'angle aigu.

Cette structure vise à assurer une meilleure étanchéité lorsqu'une pression est exercée sur la bague. En effet, lorsqu'on exerce une pression sur une telle bague, la lèvre d'étanchéité se déforme dans la direction de l'axe de la bague et ferme la bague avec un angle de fermeture plus grand. Il en résulte que la lèvre d'étanchéité entoure complètement le joint et que celui-ci est fortement pressé contre les surfaces que l'on veut rendre étanches.

On constate cependant qu'une telle bague d'étanchéité est susceptible de tourner et, ainsi d'endommager le joint.

L'invention résout précisément ce problème en proposant une bague d'étanchéité du type décrit ci-dessus, dans laquelle la lèvre d'étanchéité comporte à sa périphérie externe, de préférence dans sa partie la plus épaisse, un rebord moleté perpendiculaire à l'axe de la bague d'étanchéité. Cette disposition empêche que la bague d'étanchéité, en venant s'appuyer contre la surface d'arrêt, ne tourne et n'endommage le joint.

Le dessin annexé représente, à titre d'exemple, une bague d'étanchéité selon l'invention.

La figure 1 en est une vue en coupe.

La figure 2 montre la bague d'étanchéité avec un boulon de serrage.

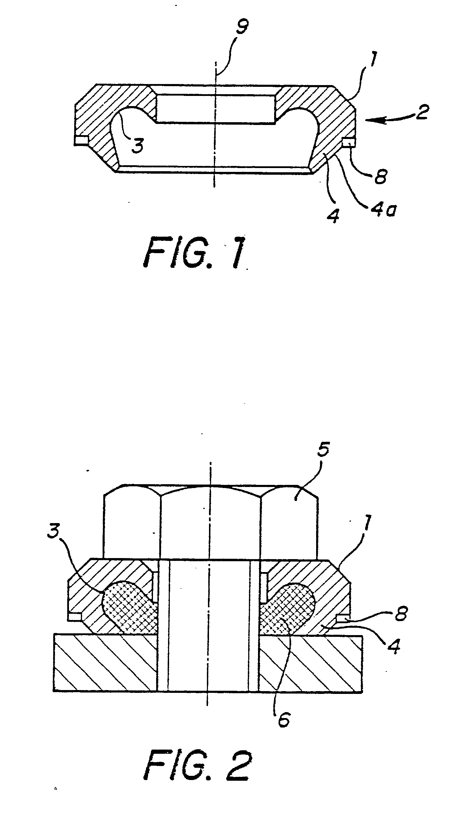

La bague d'étanchéité désignée globalement par 1 est profilée en L. La partie terminale 2 de la bague d'étanchéité soumise à la pression et essentiellement parallèle à l'axe 9 de la bague d'étanchéité consiste en une lèvre d'étanchéité 4 qui est déformable. De plus, la face externe 4a de la lèvre d'étanchéité 4 forme un angle aigu avec l'axe 9 de la bague et est dirigé vers le joint 6, la lèvre d'étanchéité ayant une action qui va en se rétrécissant vers le sommet de l'angle aigu. Le joint 6 est logé dans la surface interne 3 de la bague d'étanchéité (voir figure 2).

La lèvre d'étanchéité comporte dans sa partie externe, de préférence dans sa partie la plus épaisse, un rebord 8 moleté perpendiculaire à l'axe 9 de la bague d'étanchéité. Cette disposition évite que la bague d'étanchéité ne tourne avec le boulon lors du serrage.

La figure 2 montre la déformation de la bague d'étanchéité 1 sous l'action de la pression exercée par le boulon 5. La lèvre d'étanchéité 4 se déforme sous l'effet de la pression de telle sorte qu'elle entoure davantage le joint d'étanchéité 6 et comprime ainsi le joint contre les surfaces qu'on veut rendre étanches.

Cette bague d'étanchéité est particulièrement intéressante pour les circuits sous pression, par exemple les circuits hydrauliques ou les circuits d'air comprimé et s'applique notamment aux tuyaux en plastique renforcés par une armature.

Elle peut être desserrée et resserrée.

## Revendications

1. Bague d'étanchéité, de section profilée, par exemple en forme de L, comportant une face interne recevant un joint élastique et dont la partie de la bague d'étanchéité (1) qui est sensiblement parallèle à l'axe (9) de la bague d'étanchéité et sur laquelle s'exerce la pression consiste en une lèvre d'étanchéité (4) déformable dont la face externe (4a) fait un angle aigu avec l'axe (9) de la bague d'étanchéité et est dirigée vers le joint (6) et dont la section va en se rétrécissant vers le sommet de l'angle aigu, caractérisée par le fait que la lèvre d'étanchéité (4) comporte à sa périphérie externe un rebord moleté (8) perpendiculaire à l'axe de la bague d'étanchéité.

2. Bague d'étanchéité selon la revendication 1, caractérisée par le fait que le rebord moleté (8) est ménagé dans la partie la plus épaisse de la lèvre d'étanchéité (4).

## Claims

1. Sealing ring, having a profiled, for example L-shaped, cross section, comprising an inner face receiving an elastic joint and of which the part of the sealing ring (1) which is substantially parallel to the axis (9) of the sealing ring and on which pressure is exerted comprises a deformable sealing lip (4) of which the outer face (4a) forms an acute angle with the axis (9) of the sealing ring and is directed towards the joint (6) and of which the cross section narrows towards the vertex of the acute angle, characterised by the fact that the sealing lip (4) comprises at its outer periphery a knurled shoulder (8) which is perpendicular to the axis of the sealing ring.

2. Sealing ring according to claim 1, characterised by the fact that the knurled shoulder (8) is arranged in the thickest part of the sealing lip (4).

**Patentansprüche**

1. Dichtring mit profiliertem, beispielsweise L-förmigem Querschnitt, der eine Innenfläche aufweist, die eine elastische Dichtung aufnimmt, und bei dem der Abschnitt des Dichtringes (1), der sich im wesentlichen parallel zur Achse (9) des Dichtrings erstreckt und den Druck aufnimmt, aus einer verformbaren Dichtlippe (4) besteht, deren Außenfläche (4a) einen spitzen Winkel mit der Achse (9) des Dichtringes bildet und auf die Dichtung (6) gerichtet ist und deren Querschnitt sich in Richtung auf den Scheitel des spitzen Winkels verjüngt, dadurch gekennzeichnet, daß die Dichtlippe (4) an ihrem äußeren Umfang einen geriffelten Rand (8) rechtwinklig zu der Achse des Dichtringes aufweist.

2. Dichtring nach Anspruch 1, dadurch gekennzeichnet, daß der geriffelte Rand (8) in dem breitesten Abschnitt der Dichtlippe (4) angeordnet ist.

FIG. 1

FIG. 2

1